# EUROPÄISCHE PATENTSCHRIFT

(11) **EP 2 080 729 B1**
(45) Veröffentlichungstag und Bekanntmachung des Hinweises auf die Patenterteilung: **14.12.2011**
(21) Anmeldenummer: 09000120.7
(22) Anmeldetag: 08.01.2009
(51) Int. Cl.: B66C 23/66, B60P 1/54

(54) **Ladekran mit in Transportstellung bringbarem Lastaufnahmemittel**
Loading crane with load carrying means that can be brought in a transport position
Grue de chargement avec un moyen de prise de charge susceptible d'être porté dans une position de transport

(30) Priorität: 10.01.2008 AT 1508 U
(43) Veröffentlichungstag der Anmeldung: 22.07.2009
(73) Patentinhaber: Bachinger, Johann, 5351 Aigen-Voglhub (AT)
(72) Erfinder: Bachinger, Johann, 5351 Aigen-Voglhub (AT)
(74) Vertreter: Kovac, Werner

(56) Entgegenhaltungen:
- WO-A1-01/81230
- WO-A1-2006/121406
- AT-B- 401 508
- JP-U- 60 187 189
- US-A- 3 895 694

## Beschreibung

### Gegenstand

Die Erfindung betrifft einen mobilen Ladekran mit einem auf einem Fahrzeug befestigbaren Fußteil, und mit einem um eine vertikale und eine horizontale Achse schwenkbaren Arm, an dessen Ende ein Lastaufnahmemittel angebracht ist, gemäß dem Oberbegriff des Anspruch 1. Bei aufwändiger gestalteten Ladekranen ist zwischen einer auf dem Fußteil um eine vertikale Achse drehbaren Säule und dem Arm noch ein weiterer Arm gelenkig angeordnet, oft ist der Arm auch mehrteilig und teleskopierbar.

Derartige Krane sind meist auf Lastkraftwagen nahe der Ladepritsche montiert, entweder hinter dem Fahrerhaus oder hinter der Pritsche, um damit Ladung aufnehmen und löschen zu können. In der Regel werden darartige Krane hydraulisch betrieben, die Bedienungseinheit ist meist an ihrem Fußteil angebracht. Für den Fahrbetrieb des Lastkraftwagen werden sie in eine sogenannte Parkstellung gebracht.

### Stand der Technik

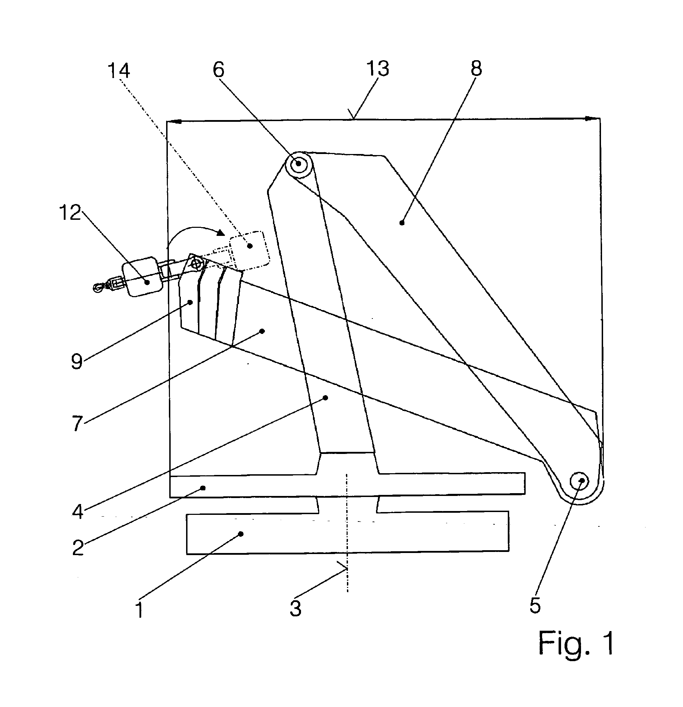

Ein derartiger Ladekran ist beispielsweise in der AT Patentschrift 370 701 abgebildet; sein Arm ist teleskopierbar. Zur Einnahme der Parkstellung wird der Arm in eine quer zur Fahrtrichtung liegende Vertikalebene verschwenkt; sind zwei gelenkig miteinander verbundene Arme vorhanden, wird der äussere Arm so lange nach unten geschwenkt bis er mit dem weiteren Arm einen spitzen Winkel einschließt; sodann wird der weitere Arm in demselben Drehsinn abwärts geschwenkt. Das unter der Wirkung der Schwerkraft abwärts hängende Lastaufnahmemittel, meist ein Kranhaken mit oder ohne Drehvorrichtung, ist bei diesem Vorgang hinderlich und steht bei in die Parkstellung gebrachten Armen nach außen ab (siehe Fig.1). Dadurch vergrößert es das Lichtraumprofil des Lastkraftwagens und gefährdet andere Verkehrsteilnehmer. Deshalb wird es gewöhnlich mit großer Kraftanstrengung händisch nach oben-einwärts geschwenkt. So oder so schlenkert es während der Fahr hin und her, wenn es nicht festgezurrt ist. Das Festzurren aber ist umständlich und erfordert eine zeitraubende Manipulation.

Aus der AT Patentschrift 401 508 B und aus der WO 2006/121406 A1 ist jeweils ein Ladekran mit teleskopierbarem Arm bekannt. In den beiden Schriften wird das Zusatzgerät beziehungsweise das Lastaufnahmemittel beim Einziehen des teleskopierbaren Armes durch einen an einem nicht verschiebbaren Teil dessen befestigten Anschlag einwärts geschwenkt. Diese Lösung erfordert einen teleskopierbaren Arm, ist konstruktiv aufwändig und erfordert umfangreiche Änderungen an dem Arm. Außerdem besteht wegen der großen Kraft des Hydraulikzylinders, der den Arm teleskopisch zusammenschiebt, die Gefahr einer Beschädigung des Anschlages oder des Zusatzgerätes.

Aus der WO 00/73195 A1 und aus der WO 04/031067 A1 sind schließlich Schwingungsdämpfungsvorrichtungen für das Gehänge eines Kranarmes bekannt, bei denen eine Reibungsbremse eingesetzt ist. Um die Dämpfungswirkung zu erreichen, muss das Gehänge jedoch um eine Achse pendeln können, es darf somit just nicht arretiert sein.

Schließlich ist aus der WO 01/81230 A1 ein Lastaufnahmemittel bekannt, das über ein Zwischenstück mit dem Arm eines Ladekrans verbunden ist. Das Zwischenstück hat an seinen Enden Schwenkachsen, die zueinander normal angeordnet sind. Das Lastaufnahmemittel enthält einen Hydraulikzylinder, der nebstbei dazu dient, das Lastaufnahmemittel über eine zu diesem Zweck eigens anzubringende Kette in Transportstellung zu bringen.

### Aufgabe / Lösung

Es ist somit Aufgabe der Erfindung, eine einfache und zuverlässige, und wenn möglich sogar nachrüstbare, Vorrichtung zu schaffen, mit der das Lastaufnahmemittel ohne direkten manuellen Eingriff in Parkstellung zu bringen und zu halten ist. Erfindungsgemäß wird das mit den kennzeichnenden Merkmalen des 1. Anspruches erreicht.

Dem liegt die Erkenntnis zugrunde, dass es zum Verschwenken des Lastaufnahmemittels in seine Parkposition keiner externen Krafteinwirkung bedarf, wenn man den Arm zunächst in eine angenähert vertikale Lage aufwärts schwenkt. Dabei hält die Schwerkraft das Lastaufnahmemittel lotrecht und der Arm wird an das Lastaufnahmemittel heran geschwenkt, anstatt dass - umgekehrt wie nach dem Stand der Technik - das Lastaufnahmemittel an den Arm geschwenkt beziehungsweise auf diesen gehoben wird. Wenn auf diese Weise die relative Parkposition des Lastaufnahmemittels erreicht ist, kommt die Schwenkverriegelung zur Wirkung. Sie wird durch das Zusammenwirken eines verschiebbaren Riegels mit einer Vertiefung in dem daran anschließenden Teil bewerkstelligt. Dazu entspricht die Zuordnung von Riegel und Vertiefung der Parkposition des Lastaufnahmemittels bezüglich des Armes. Wenn diese Position erreicht ist, dringt der Riegel in die Vertiefung ein und arretiert das Lastaufnahmemittel.

Das Zwischenstück ist im einfachsten Fall am Kranhaken oder an der Drehvorrichtung selbst angeformt. Wenn die Aufhängung des Lastaufnahmemittels eine kardanische ist, ist das Zwischenstück zweckmäßig ein eigener Bauteil. Das hat nebstbei den Vorteil, dass die erfindungsgemäße Arretiervorrichtung ohne Veränderungen an bestehenden Kranen nachrüstbar ist. Im Falle einer kardanischen Aufhängung kann zwischen dem Zwischenstück und dem Lastaufnahmemittel eine weitere baugleiche Schwenkverriegelung vorgesehen sein.

Der Riegel der Schwenkverriegelung ist entweder im Zwischenstück oder in dem angrenzen Bauteil untergebracht und die Vertiefung im jeweils anderen der beiden Teile. Bevorzugt ist der Riegel im Zwischenstück und die Vertiefung in dem jeweils anschließenden Teil. Damit ist die erfindungswesentliche Schwenkverriegelung ganz im Zwischenstück verkörpert, welches so nachrüstbar ist.

In einer bevorzugten Ausführungsform hat die Vertiefung bezüglich der Verschieberichtung des Riegels geneigte Wände und ist der Riegel von einer Druckfeder belastet. Die Druckfeder ist so stark, dass sie das leere Gehänge beziehungsweise das Zwischenstück mit dem leere Gehänge in der ungünstigsten Schwenkstellung - wenn deren Längsachse horizontal ist - drehfest hält. Der Riegel schnappt so bei Erreichen der Parkstellung selbsttätig ein. Zum Lösen der Verriegelung wird die Lastaufnahmevorrichtung einfach zusätzlich belastet, zum Beispiel durch Anschlagen einer Last. Durch die höhere Belastung wird die Kraft der Druckfeder überwunden und der Riegel aus der Vertiefung gedrängt.

In einer besonders einfachen Ausführungsform ist der Riegel eine Kugel und die Vertiefung ist kegelförmig. Der Riegel kann sowohl in radialer als in axialer Richtung verschiebbar sein, dem entsprechen zwei Varianten. In der ersten Variante ist der Riegel bezüglich der jeweiligen Schwenkachse in radialer Richtung verschiebbar und ist die Vertiefung in einer drehfest mit dem anschließenden Teil verbundenen auf der Schwenkachse sitzenden Scheibe. Die Abflachung der Scheibe stellt auf denkbar einfache Weise die drehfeste Verbindung mit dem anschließenden Teil her.

In der zweiten Variante ist der Riegel in Richtung der jeweiligen Schwenkachse geführt und wirkt mit einer Vertiefung in einer achsnormalen Ebene zusammen. Die Wirkungsweise ist dieselbe wie bei radial verschiebbarem Riegel.

Bei gewissen Anwendungen kann es von Vorteil sein, eine Fernbedienung der Schwenkverriegelung vorzusehen. Dann kann der Riegel ein im Wesentlichen zylindrischer Stift sein, der mittels eines Hydraulikzylinders oder eines Elektromagneten, einfachwirkend gegen die Kraft einer Feder oder doppeltwirkend, ein- beziehungsweise ausrückbar ist.

### Abbildungen

Fig.1: Schematische Ansicht eines Ladekranes in Parkstellung,
Fig.2: Schematische Ansicht eines erfindungsgemäßen Ladekranes in einer Zwischenstellung,
Fig.3: Detail III in Fig. 2 in axonometrischer Ansicht, vergrößert,
Fig.4: Zwischenstück aus Fig. 3,
Fig.5: Schnitt nach V-V in Fig.3, vergrößert,
Fig.6: Schnitt nach VI-VI in Fig. 3, eine abgewandelte Ausführungsform zeigend,
Fig.7: Ansicht nach VII-VII in Fig. 6.

### Beschreibung

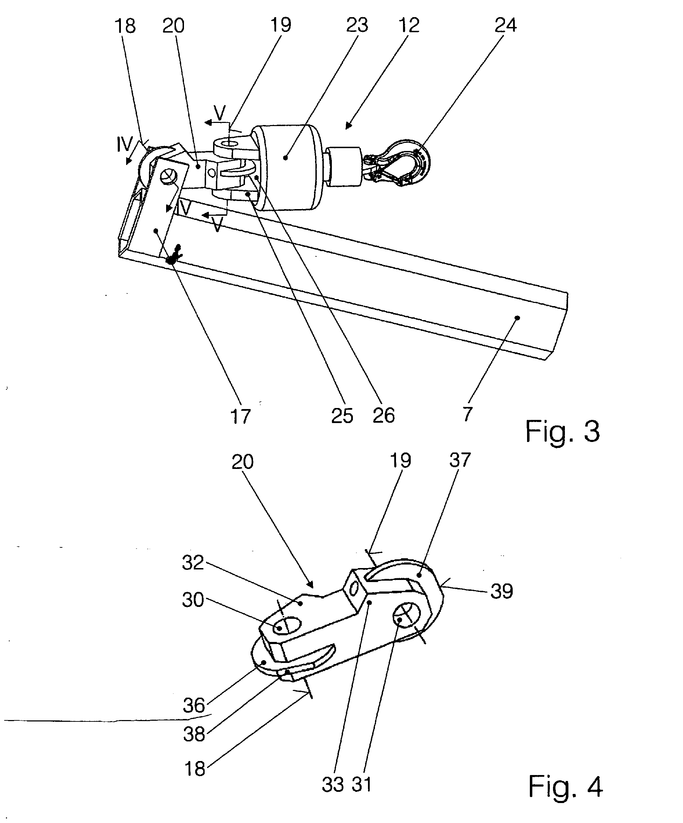

Der in **Fig. 1** abgebildete Ladekran, zunächst nach dem Stand der Technik, ist auf einem Lastkraftwagen - angedeutet als Platte 1 - montiert. Er besteht aus einem Fußteil 2, einer auf diesem um eine vertikale Achse 3 drehbaren Säule 4 und den beiden Armen 7,8. Bei einfacheren Ladekranen ist nur ein Arm 7 vorgesehen. Der Arm 7 ist um eine erste horizontale Achse 5 und an dem weiteren Arm 8 um eine zweite horizontale Achse 6 schwenkbar. Der Arm 7 kann aus mehreren ineinander teleskopisch verschiebbaren Teilen bestehen, was mit dem Bezugszeichen 9 angedeutet ist. Am äußeren Ende des Armes 7 hängt ein Lastaufnahmemittel 12, zum Beispiel ein Kranhaken 24 (Fig. 3).

In Fig. 1 ist der Ladekran in Parkstellung zu sehen. Um für den Transport in diese Stellung zu gelangen, wird der Arm 7 im Uhrzeigersinn um die Achse 5 verschwenkt, sodass seine Oberseite unten ist. Dabei ist das hängende Lastaufnahmemittel 12 hinderlich. Es steht seitlich weg, weil es an der Unterseite des Armes hängt, die nun aber die Oberseite ist. Für den Transport wird das Lastaufnahmemittel 12 dann meist von Hand in die mit 14 angedeutete Parkstellung gebracht. Das ist schwer und zeitaufwändig.

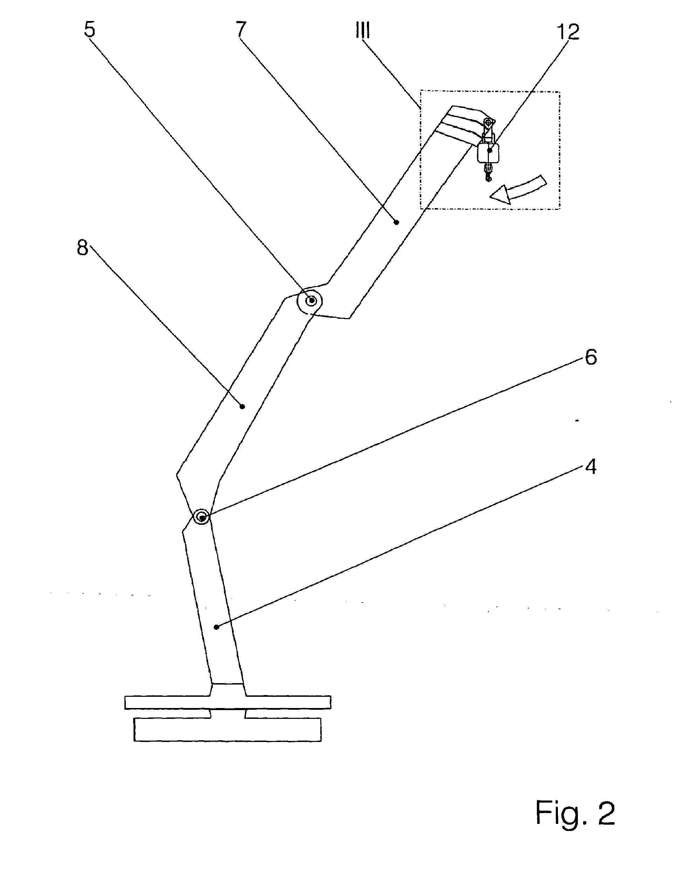

**Fig. 2** zeigt den Ladekran in extremer Strecklage, in der das Lastaufnahmemittel 12 bezüglich des Armes 7 bereits seine Parkposition einnimmt. Dank der vorliegenden Erfindung kann es in dieser Position in einfacher Weise ferngesteuert, ja sogar vollkommen selbsttätig arretiert werden, sodass es beim Verschwenken des Armes in die Parkposition in dieser Stellung bleibt. Um in seine Parkposition zu gelangen, wird der Arm einfach ohne Last in seine angenähert vertikale Strecklage gebracht.

**Fig. 3** zeigt die kardanische Aufhängung des Lastaufnahmemittels 12, die dessen Schwenken um zwei zueinander rechtwinkelig - windschiefe Achsen 18,19 erlaubt. Am äußeren Ende des Armes 7 sind zwei erste Laschen 17 angebracht, die einen die Achse 18 verkörpernden ersten Schwenkachsbolzen 30 (Fig. 4) aufnehmen. Um diesen ist ein Zwischenstück 20 schwenkbar gelagert, dessen anderes Ende in einem zweiten Schwenkachsbolzen 31 (Fig. 4) gelagert ist. Dieser (31) wird von zweiten Laschen 25 gehalten, die am Lastaufnahmemittel 12, hier an dessen Drehvorrichtung 23, befestigt sind. In einer besonders einfachen Ausführung kann die zweite Schwenkachse 19 unterbleiben und das Zwischenstück einstückig mit der Drehvorrichtung 23 oder dem Kranhaken 24 sein.

Anhand der **Fig. 4** wird nun die Schwenkverriegelung beschrieben. Das Zwischenstück 20 ist ein länglicher Quader mit windschiefen Bohrungen entsprechend den beiden Schwenkachsen 18,19. An seinen beiden Enden hat er Schlitze, die auf den Schwenkachsbolzen 30,31 (und somit bezüglich des Zwischenstückes 20) drehbare Scheiben 36, 37 aufnehmen. Diese Scheiben sind kreisförmig mit einer Abplattung 38,39, welche an einer geeigneten Fläche der angrenzenden Teile anliegt und so eine denkbar einfache drehfeste Verbindung mit diesen herstellt. Die Abplattung 38 liegt an der (jetzt) Oberkante des Armes 7 auf, die Abplattung 39 auf einer Kontaktfläche 26 der Drehvorrichtung.

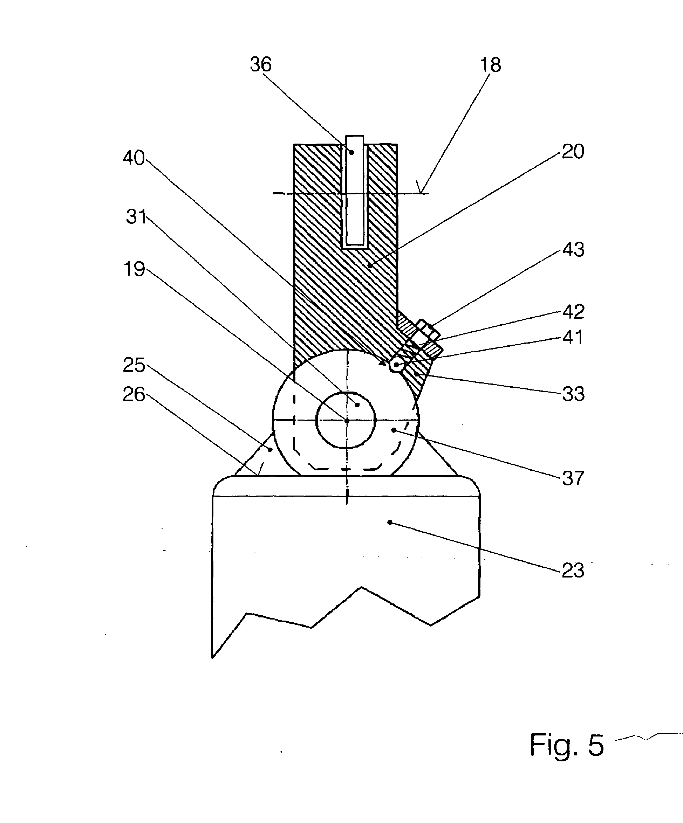

In **Fig. 5** ist das Zwischenstück aufgeschnitten und man erkennt eine Vertiefung 40 in der Scheibe 37 und eine Kugel 41, die von einer Druckfeder 42 in die Vertiefung 40 gepresst ist. Allgemein handelt es sich bei der Kugel 41 um einen Riegel, der eine praktisch formschlüssige Verbindung zwischen den beiden Teilen herstellt. Die Druckfeder 42 ist so bemessen, dass sie das lastlose Lastaufnahmemittel 12 auch in horizontaler Lage hält, aber bei einer größeren Kraft - etwa wenn eine Last angeschlagen ist - nachgibt und so die Verriegelung löst.

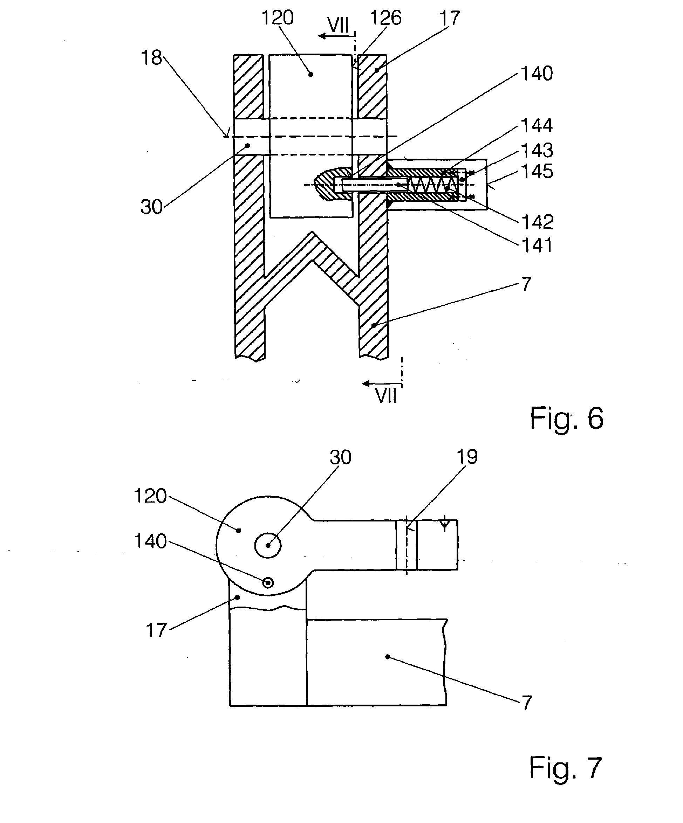

**Fig. 6** und **Fig. 7** zeigen eine Variante. Die Bezugszeichen abweichender Teile sind um 100 erhöht. Der Unterschied besteht darin, dass das Zwischenstück 120 zumindest eine zur Schwenkachse 18 normale Ebene 126 mit einer Vertiefung 140 hat, in die ein Riegel 141 eingreift. Der Riegel ist in einem an der Lasche 17 angeschweißten rohrförmigen Ansatz 144 geführt. Dieser ist von einem Deckel 143 verschlossen, an dem sich eine Druckfeder 142 abstützt. Sie drückt den Riegel 141, hier ein zylindrischer Stift mit abgeschrägten Enden (nicht zu sehen), in die Ausnehmung 140.

Anstelle des Deckels kann auch ein Aktuator (angedeutet mit dem rechteckigen Kasten 145) vorgesehen sein, wenn auf die selbsttätige Ver- und Entriegelung kein Wert gelegt wird. Als Aktuator kommen die bekannten hydraulischen oder elektrischen Vorrichtungen in Frage, einfachwirkend mit Feder oder doppeltwirkend.

Es wurden zwei Ausführungsbeispiele mit verschiedenen konstruktiven Merkmalen beschrieben. Wesentlich ist, dass das Lastaufnahmemittel 12 durch Anheben des Armes 7 in die extreme Strecklage bezüglich des Armes 7 in seine Parkposition gebracht wird und dass es möglich ist, es ohne äußere Einwirkung in dieser Position zu verriegeln und auch wieder zu entriegeln.

## Patentansprüche

1. Mobiler Ladekran, mit einem auf einem Fahrzeug befestigbaren Fußteil (2), einem um eine vertikale (3) und eine horizontale Achse (6;5) schwenkbaren Arm (7), an dessen Ende ein Lastaufnahmemittel (12) angebracht ist, wobei ein Zwischenstück (20;120) einerseits mittels einer ersten Schwenkachse (18) mit dem Ende des Armes (7), und andererseits mittels einer zweiten Schwenkachse (19) mit dem Lastaufnahmemittel (12) verbunden ist, wobei die beiden Schwenkachsen (18,19) zueinander normal angeordnet sind,
**dadurch gekennzeichnet, dass**
a) Zwischen dem Zwischenstück (20;120) und dem Ende des Armes (7) eine Schwenkverriegelung (40,41;140,141) vorgesehen ist, welche aus einem verschiebbaren Riegel (41;141) in dem einen Teil (20;120 bzw 7;17;36) und einer Vertiefung (40;140) in dem daran anschließenden oder mit ihm drehfest verbundenen Teil (7;17;36 bzw 20;120) besteht,
b) Wobei die Zuordnung von Riegel (41;141) und Vertiefung (40;140) der Parkposition ((14)) des Lastaufnahmemittels (12) bei Parkposition des Armes (7) entspricht, sodass der Riegel (41;141) in die Vertiefung (40;140) eindringt, sobald er in einer Parkstellung mit dieser zur Deckung kommt.

2. Mobiler Ladekran nach Anspruch 1, **dadurch gekennzeichnet, dass** zwischen dem Zwischenstück (20;120) und dem Lastaufnahmemittel (12) eine weitere gleichartige Schwenkverriegelung vorgesehen ist.

3. Mobiler Ladekran nach Anspruch 1, **dadurch gekennzeichnet, dass** der Riegel (41) im Zwischenstück (20) angeordnet ist und die Vertiefung (40) in dem jeweils anschließenden Teil (37 bzw 12).

4. Mobiler Ladekran nach Anspruch 1 oder 2, **dadurch gekennzeichnet, dass** die Vertiefung (40;140) der Schwenkverriegelung bezüglich der Verschieberichtung des Riegels (41;141) geneigte Wände hat und der Riegel von einer Druckfeder (42;142) belastet ist, welche so stark ist, dass sie das Zwischenstück (20;120) in seiner ungünstigsten Stellung drehfest hält und bei höherer Belastung aus der Vertiefung (40;140) gedrängt wird.

5. Mobiler Ladekran nach Anspruch 4, **dadurch gekennzeichnet, dass** der Riegel (41) eine Kugel und die Vertiefung (40) kegelförmig ist.

6. Mobiler Ladekran nach Anspruch 4, **dadurch gekennzeichnet, dass** der Riegel (41) im Zwischenstück (20) bezüglich der Schwenkachse (18) in radialer Richtung verschiebbar ist, und dass die Vertiefung (40) in einer drehfest mit dem anschließenden Teil (7) verbundenen zumindest teilweise kreisförmigen Scheibe (36) ist, die auf dem Schwenkachsbolzen (30) sitzt.

7. Mobiler Ladekran nach Anspruch 6, **dadurch gekennzeichnet, dass** die drehfeste Verbindung zwischen der Scheibe (36) und dem anschließenden Teil (7) **dadurch** hergestellt ist, dass die zumindest teilweise kreisförmige Scheibe (36) eine Abflachung (38) aufweist, die an einer Kontaktfläche des anschließenden Teiles (7) anliegt.

8. Mobiler Ladekran nach Anspruch 4, **dadurch gekennzeichnet, dass** der Riegel (141) in Richtung der jeweiligen Schwenkachse (18) geführt ist und mit einer Vertiefung (140) in einer achsnormalen Ebene (126) zusammenwirkt.

9. Mobiler Ladekran nach Anspruch 1, **dadurch gekennzeichnet, dass** der Riegel (141) der Schwenkverriegelung ein im Wesentlichen zylindrischer Stift ist, der einer von einem Aktuator (145) verschiebbar ist.

10. Mobiler Ladekran nach Anspruch 9, **dadurch gekennzeichnet, dass** der Aktuator (145) ein doppeltwirkender Hydraulikzylinder ist.

11. Mobiler Ladekran nach Anspruch 9, **dadurch gekennzeichnet, dass** der Aktuator (145) ein den Riegel (141) gegen die Kraft einer Feder (142) einrückender Elektromagnet ist.

## Claims

1. Mobile loading crane with a base (2) mounted on a vehicle, with an arm (7) tiltable about a vertical (3) and a horizontal (6; 5) axis, at the end of which arm (7) a load bearing means (12) is attached, an intermediate piece (20; 120) being linked on its one side with an end of the arm (7) by means of a first tilting axis (18) and on its other side with the load bearing means (12) by means of a second tilting axis (19), the two tilting axes (18,19) being arranged at a right angle with regard to one another, **characterized in that**
a) A tilting lock (40,41; 140,141) is provided between the intermediate piece (20; 120) and the tip of the arm (7), the tilting lock comprising a shiftable bolt (41; 141) in the one part (20; 120 or 7; 17; 36) and an indentation (40; 140) in the adjacent other part or the part coupled for rotation with it (7; 17; 36 or 20; 120),
b) The correlation between the bolt (41; 141) and the indentation (40; 140) corresponds to the parking position (14) of the load bearing means (12) when the arm (7) is in its parking position, the bolt (41; 141) engaging the indentation (40; 140) when it coincides with the latter in the parking position.

2. Mobile loading crane according to claim 1, **characterized in that** a further tilting lock is provided between the intermediate piece (20; 120) and the load bearing means (12).

3. Mobile loading crane according to claim 1, **characterized in that** the bolt (41) is disposed in the intermediate piece (20) and the indentation (40) in the adjacent part (37 or 12).

4. Mobile loading crane according to claim 1 or 2, **characterized in that** the indentation (40; 140) of the tilting lock has walls inclined to the direction of motion of the bolt (41; 141) and that the bolt is biased by a compression spring (42; 142), dimensioned to hold the intermediate piece (20; 120) against tilting in its most adverse position, and is forced out of engagement with the indentation (40; 140) by a higher load.

5. Mobile loading crane according to claim 4, **characterized in that** the bolt (41) is a ball and the indentation (40) is conical.

6. Mobile loading crane according to claim 4, **characterized in that** the bolt (41) is shiftable in the intermediate piece (20) in a radial direction with regard to the tilting axis (18), and that the indentation (40) is disposed in an at least in part circular disk (36), the disk (36) being coupled for rotation with the adjacent part (7) an being journalled on the tilting bolt (30).

7. Mobile loading crane according to claim 6, **characterized in that** the coupling for rotation between the disk (36) and the adjacent part (7) is achieved by the at least in part circular disk (36) having a flattening (38) bearing on a contact surface (26) of the adjacent part (7).

8. Mobile loading crane according to claim 4, **characterized in that** the bolt (141) is shiftable in the direction of the corresponding tilting axis (18) and cooperates with an indentation in a plane (126) at a right angle to the axis.

9. Mobile loading crane according to claim 1, **characterized in that** the bolt (141) of the tilting lock is an essentially cylindrical pin and is shiftable by an actuator (145).

10. Mobile loading crane according to claim 9, **characterized in that** the actuator (145) is a double acting hydraulic cylinder.

11. Mobile loading crane according to claim 9, **characterized in that** the actuator (145) is an electric solenoid acting on the bolt against a spring (142).

## Revendications

1. Grue de charge mobile avec un socle (2) monté sur un véhicule, avec un bras (7) basculant autour d'un axe vertical (3) et un axe horizontal d'articulation (6; 5) dont l'extrèmité et muni d'un moyen d'attache (12) d'une charge, un membre intermédiaire (20; 120) étant relié d'un coté à l'extrémité du bras (7) par moyen d'un premier axe d'articulation (8) et de l'autre coté au moyen d'attache (12) par moyen d'un second axe d'articulation (19), les deux axes d'articulation (18,19) étant orthogonaux déjetés, **caractérisée en ce que**
a) Entre le membre intermédiaire (20; 120) et l'extrémité du bras (7) est prévue un verrouillage anti- basculement (40,41; 140,141) se composant d'un verrou (41; 141) dans un élément (20;120 respectivement 7; 17; 36) et une encoche (40; 140) dans l'élément voisin ou relié en rotation avec celui-ci (7; 17; 36 respectivement 20;120),
b) La correlation entre le verrou (41; 141) et l'encoche (40; 140) correspond à la position de rangement du moyen d'attache (12) lorsque le bras (7) est en position de rangement, de manière à ce que le verrou (41; 141) engage l'encoche (40; 140) aussitôt que le verrou (41; 141) coincide avec l'encoche (40; 140).

2. Grue de charge mobile selon la revendication 1, **caractérisée en ce que** entre le membre intermédiaire (20; 120) et le moyen d'attache (12) est prévue un verrouillage ant-basculement identique.

3. Grue de charge mobile selon la revendication 1, **caractérisée en ce que** le verrou (41) est disposé dans le membre intermédiaire (20) et l'encoche (40) dans l'élément voisin.

4. Grue de charge mobile selon la revendication 1 ou 2, **caractérisée en ce que** l'encoche (40; 140) du verrouillage de basculement a des parois obliques par rapport à la direction de coulissement du verrou (41; 141) et que le verrou est sollicité par un ressort de pression (42; 142) suffisamment fort pour fixer en rotation le membre intermédiaire (20; 120) dans sa position la plus défavorable, et permet à une force supérieure de le repousser de l'encoche (40; 140).

5. Grue de charge mobile selon la revendication 1, **caractérisée en ce que** le verrou (41) est une bille et l'encoche (40) est conique.

6. Grue de charge mobile selon la revendication 1, **caractérisée en ce que** le verrou (41) est guidé dans le membre intermédiaire (20) à coulissement dans une direction radiale par rapport à l'axe d'articulation (18) et que l'encoche est disposée dans un disque (36) au moins partiellement circulaire disposé sur le boulon d'articulation (30), le disque étant relié en rotation à l'élément voisin (7).

7. Grue de charge mobile selon la revendication 6, **caractérisée en ce que** la liaison en rotation entre le disque (36) et l'élément voisin (7) est établi par un applatissage (38) du disque (36), l'applatissage (38) s'appuyant sur une plaine de contact de l'élément voisin (7).

8. Grue de charge mobile selon la revendication 4, **caractérisée en ce que** le verrou (141) est guidé dans la direction de l'axe de basculement (18) correspondant et coopère avec une encoche (140) dans une plaine (126) orthogonale à l'axe.

9. Grue de charge mobile selon la revendication 1, **caractérisée en ce que** le verrou (141) du verrouillage anti-basculement est une tige essentiellement cylindrique commandée à coulissement par moyen d'un actuateur (145).

10. Grue de charge mobile selon la revendication 9, **caractérisée en ce que** l'actuateur (145) est un vérin hydraulique à double effet.

11. Grue de charge mobile selon la revendication 9, **caractérisée en ce que** l'actuateur (145) est un aimant éléctrique engageant le verrou (141) contre la force d'un ressort (142).
